Europäisches Patentamt

European Patent Office

Office européen des brevets

(11) Numéro de publication: **0 316 664 B1**

## (12) FASCICULE DE BREVET EUROPEEN

(45) Date de publication de fascicule du brevet: **08.04.92**

(21) Numéro de dépôt: **88118295.0**

(22) Date de dépôt: **03.11.88**

(51) Int. Cl.⁵: **H01S 3/02**, H01S 3/042, H01S 3/08

(54) **Laser à corps solide.**

(30) Priorité: **17.11.87 CH 4471/87**
**30.11.87 FR 8716696**

(43) Date de publication de la demande:
**24.05.89 Bulletin 89/21**

(45) Mention de la délivrance du brevet:
**08.04.92 Bulletin 92/15**

(84) Etats contractants désignés:
**AT BE DE GB IT NL SE**

(56) Documents cités:
**DE-A- 1 614 624**
**DE-A- 1 951 267**
**US-A- 3 528 030**

(73) Titulaire: **LASAG AG**
**Steffisburgstrasse 1**
**CH-3600 Thun(CH)**

(72) Inventeur: **Gressly, André**
**Honeggweg 16a**
**CH-3612 Steffisburg(CH)**
Inventeur: **Bigler, Andreas**
**Eichenriedweg 66**
**CH-3612 Steffisburg(CH)**

(74) Mandataire: **de Montmollin, Henri et al**
**ICB Ingénieurs Conseils en Brevets SA Passage Max Meuron 6**
**CH-2001 Neuchâtel(CH)**

Rank Xerox (UK) Business Services

## Description

La présente invention a pour objet un laser à corps solide comportant une base rigide, une tête laser comprenant un barreau laser ayant un axe longitudinal et une lampe de pompage optique couplée audit barreau laser, et des moyens de liaison de ladite tête laser à ladite base.

Comme cela sera rendu évident par la suite de cette description, le laser objet de la présente invention peut être aussi bien un laser oscillateur qu'un laser amplificateur.

Dans le premier cas, il comporte de manière bien connue deux miroirs, dont l'un au moins est partiellement transparent, qui sont disposés sur l'axe du barreau laser de part et d'autre de celui-ci pour définir une cavité résonnante.

Dans le deuxième cas, le laser ne comporte pas ces miroirs.

Dans les lasers du genre défini ci-dessus, la lampe de pompage du barreau laser doit être remplacée assez fréquemment, car elle s'use assez rapidement ou même , parfois, se brise.

Cette lampe a une forme allongée, et elle est disposée dans la tête laser de manière que sa longueur soit parallèle à l'axe longitudinal du barreau laser.

En outre, cette lampe est fixée dans la tête laser par ses deux extrémités, qui traversent des ouvertures adéquates ménagées dans les parois de cette tête laser.

Pour remplacer cette lampe, il faut donc la glisser à travers une de ces ouvertures, dans une direction parallèle à l'axe du barreau laser.

Or, dans un laser, des éléments optiques tels que les miroirs mentionnés ci-dessus ou des lentilles sont généralement disposés dans l'axe du barreau laser, à des distances de la tête laser qui sont inférieures à la longueur de la lampe de pompage, et ces éléments optiques ou leurs supports empêchent souvent de sortir complètement la lampe de pompage de la tête laser.

Dans la plupart des cas, il faut donc enlever complètement la tête laser ou un, voire plusieurs, de ces éléments optiques de la base sur laquelle ils sont fixés pour pouvoir procéder au remplacement de la lampe de pompage.

Un tel démontage a comme inconvénient que tous les réglages de la position des divers éléments du laser qui sont nécessaires au fonctionnement correct de celui-ci doivent être refaits après chaque changement de cette lampe de pompage. Ces réglages sont délicats et demandent beaucoup de temps.

En outre, la tête laser est généralement pourvue d'un canal dans lequel circule un fluide, de l'eau par exemple, destiné à évacuer la chaleur produite pendant le fonctionnement du laser, et ce canal comporte une portion qui entoure la lampe de pompage.

Si c'est la tête laser qui est démontée pour permettre le remplacement de la lampe de pompage, il faut évidemment déconnecter ces tuyaux avant ce démontage, et les reconnecter après avoir remis la tête laser en place.

Au cours de ces opérations de déconnexion et de reconnexion de ces tuyaux, il est toujours possible qu'une certaine quantité du fluide de refroidissement s'écoule sur la base du laser ou sur d'autres éléments de celui-ci, ce qui peut provoquer une corrosion de cette base et/ou de ces éléments. Il est également possible que ce fluide provoque des courts-circuits électriques entre des éléments disposés sur cette base et se trouvant à des potentiels différents pendant le fonctionnement du laser.

En outre, dans tous les cas, une certaine quantité de fluide peut également sortir de la tête laser au moment où la lampe est glissée hors de son logement, avec les mêmes conséquences que ci-dessus.

Il est parfois possible de donner à l'un des supports des éléments optiques disposés dans l'axe du barreau laser une forme telle qu'il ne gêne pas le remplacement de la lampe de pompage, par exemple en prévoyant dans ce support une ouverture de dimensions et de position adéquates.

Les réglages mentionnés ci-dessus n'ont alors plus besoin d'être refaits après chaque changement de lampe, mais le risque de voir du fluide de refroidissement se répandre sur la base du laser subsiste.

En outre, si la lampe de pompage n'est pas simplement usée, mais qu'elle doit être remplacée parce qu'elle s'est brisée, il est de toutes façons nécessaire de séparer la tête laser de la base du laser, avec les inconvénients mentionnés ci-dessus, car, sinon, le logement de cette lampe ne peut pas être nettoyé convenablement de tous les débris qui peuvent y rester.

Dans les lasers du genre défini ci-dessus qui sont actuellement disponibles, la tête laser est directement fixée à la base du laser.

Une partie de la chaleur produite pendant le fonctionnement du laser est donc transmise à cette base, même si la tête laser est refroidie de la manière évoquée ci-dessus.

Il en résulte un échauffement local, et donc une déformation, de la base du laser. Comme les autres éléments du laser, notamment ses éléments optiques, sont également fixés à cette base, cette déformation entraîne une variation de la position relative de ces éléments les uns par rapport aux autres et par rapport à la tête laser.

Cette variation peut modifier le fonctionnement du laser, ou même l'interrompre.

DE-A-1951267 décrit un dispositif laser facilitant les réparations ou remplacements des éléments du laser, sans avoir à réajuster la cavité. Ce dispositif comprend une boîte et un couvercle. Le barreau laser et le tube à décharge sont fixés au couvercle et les miroirs externes sont insérés dans les parois de la boîte de manière à ce que, lorsque le couvercle est fixé à la boîte, le barreau laser est correctement aligné avec les miroirs.

Un but de la présente invention est de proposer un laser du genre défini ci-dessus qui ne présente pas les inconvénients qui viennent d'être décrits, c'est-à-dire dans lequel le remplacement de la lampe de pompage est aisé, ne nécessite aucun réajustement des divers éléments du laser, et peut être fait, le cas échéant, sans qu'aucune goutte du fluide de refroidissement ne tombe sur la base du laser ou sur un autre élément de celui-ci.

Ce but est atteint grâce au fait que, dans le laser revendiqué, les moyens de liaison de la tête laser à la base du laser comportent une charnière permettant de faire pivoter cette tête par rapport à cette base autour d'un axe de rotation sensiblement parallèle à l'axe du barreau laser. D'autres buts, caractéristiques et avantages du laser selon l'invention seront rendus évidents par la description qui va être faite maintenant d'une forme d'exécution de ce laser représentée à titre d'exemple non limitatif par les dessins annexés dans lesquels :

- la figure 1 est une vue en plan schématique d'une partie d'une première forme d'exécution du laser selon l'invention;
- la figure 2 est une vue de face schématique du laser de la figure 1;
- la figure 3 est une coupe partielle et schématique du laser de la figure 1 selon l'axe A-A de cette dernière;
- la figure 4 est une coupe schématique d'une partie du laser de la figure 1 selon l'axe B-B de la figure 3;
- la figure 5 est une coupe schématique d'une partie du laser de la figure 1 selon l'axe C-C de cette dernière; et
- les figures 6a et 6b sont respectivement une vue en plan et une vue de côté d'un composant du laser de la figure 1.

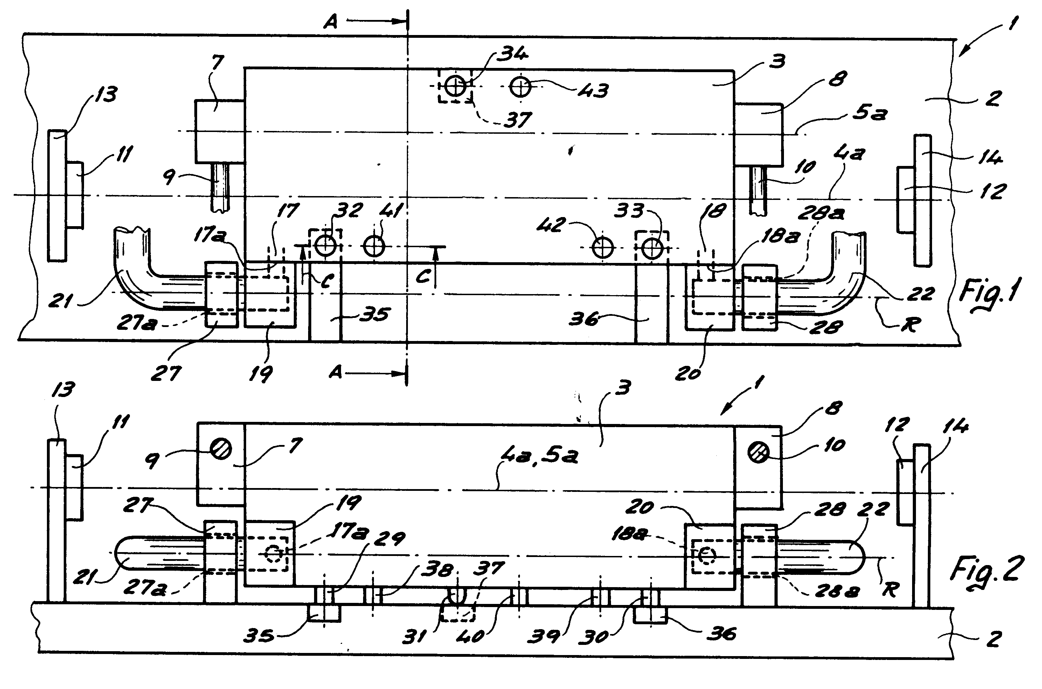

Dans la forme d'exécution représentée à titre d'exemple non limitatif aux figures 1 à 3, le laser selon l'invention est désigné par la référence 1.

Il comporte une base rigide allongée 2 qui sert de support à tous ses éléments, et notamment à une tête laser 3 dans laquelle sont disposés le barreau laser 4, pouvant être par exemple un barreau de grenat d'yttrium aluminium dopé au néodyme, et la lampe de pompage optique 5 de celui-ci.

Ce barreau 4 et cette lampe 5, qui ne sont pas visibles dans les figures 1 et 2, ont une forme allongée et leurs axes longitudinaux ont été désignés par les références 4a et 5a respectivement.

Ce barreau 4 et cette lampe 5 sont disposés dans une cavité ménagée dans la tête laser 3, de manière que leurs axes 4a et 5a soient parallèles entre eux, et au moins sensiblement parallèles à la direction de la longueur de la base 2.

Cette cavité 6, qui n'est pas visible dans les figures 1 et 2, est agencée de manière que la lampe 5 soit couplée optiquement au barreau 4, et que la quasi-totalité de la lumière qu'elle émet atteigne ce barreau 4.

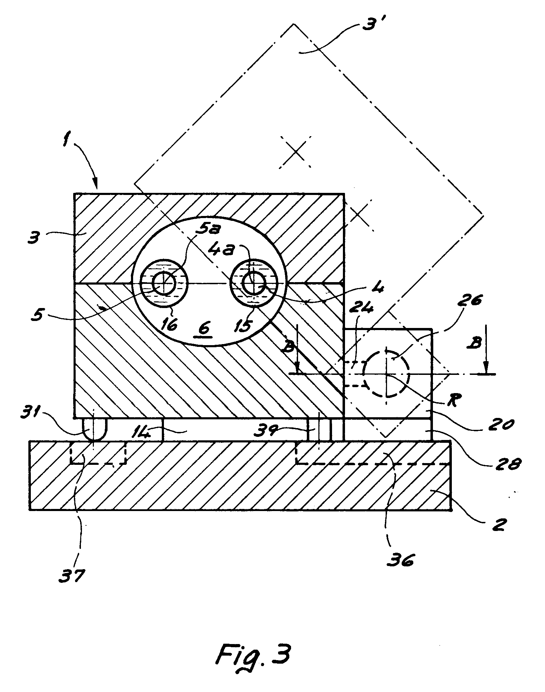

Comme on le voit dans la figure 3, cette cavité 6 a la forme d'un cylindre droit de section elliptique ayant des axes focaux respectivement confondus avec l'axe 4a du barreau et l'axe 5a de la lampe.

La paroi interne de cette cavité 6 devant avoir une forme régulière et devant être réfléchissante sur toute sa surface, il n'est pas possible d'y ménager une ouverture permettant de sortir ou de mettre en place la lampe de pompage 5 en la déplaçant dans une direction perpendiculaire à son axe 5a.

Il est donc nécessaire de prévoir à chaque extrémité de la cavité 6 une ouverture débouchant sur une des faces latérales de la tête laser 3 et par laquelle on puisse glisser cette lampe en la déplaçant dans la direction de son axe 5a. Ces ouvertures ne sont pas visibles dans les figures 1 à 3, et ne seront pas décrites plus en détail ici.

On peut simplement mentionner que, lorsque la lampe 5 est en place, ses deux extrémités sont situées chacune dans une de ces ouvertures. En outre, ces extrémités portent chacune une borne de connexion qui est reliée à une source d'alimentation électrique, non représentée, par l'intermédiaire d'un connecteur et d'un câble.

Ces connecteurs, qui sont respectivement désignés par 7 et 8, ainsi que leur liaison électrique et mécanique avec les bornes de connexion de la lampe et avec les câbles, désignés respectivement par 9 et 10, ne seront pas non plus décrits ici en détail.

On peut encore mentionner que les ouvertures mentionnées ci-dessus sont bien entendu normalement fermées de manière étanche, par exemple à l'aide de joints qui n'ont pas non plus été représentés.

Dans l'exemple représenté, le laser 1 est un laser oscillateur, et il comporte deux miroirs 11 et 12 disposés sur l'axe 4a du faisceau laser et fixés sur la base 2 par des supports 13 et, respectivement 14.

De manière bien connue, l'un des miroirs 11 et 12 est partiellement transparent et l'autre est partiellement ou complètement réfléchissant pour le faisceau produit par le laser 1, et ces miroirs définissent la cavité résonnante du laser 1.

Dans les figures 1 et 2, les miroirs 11 et 12 sont plans, mais il est bien connu que, selon les cas, l'un, l'autre ou les deux peuvent être concaves ou convexes.

Les détails de la fixation des miroirs 11 et 12 sur les supports 13 et 14 et de ces supports sur la base 2 ne seront pas décrits ici car ils n'ont pas de rapport direct avec l'invention.

Le laser 1 comporte encore des moyens pour évacuer une partie aussi importante que possible de la chaleur produite dans la tête 3 pendant son fonctionnement.

Ces moyens comprennnent notamment des enveloppes cylindriques transparentes 15 et 16 qui sont respectivement concentriques au barreau 4 et à la lampe 5 (figure 3).

Ces enveloppes 15 et 16 sont reliées à un canal ménagé dans la tête laser 3 et dont seules les extrémités ont été représentées, avec les références 17 et 18. Ces extrémités débouchent dans la face frontale de la tête laser 3 où elles forment des orifices qui sont désignés respectivement par 17a et 18a et dont les axes sont situés à la même distance de la face inférieure de la tête laser 3.

Le laser 1 comporte encore des pièces de raccordement 19 et 20 qui sont destinées à relier les extrémités 17 et 18 du canal mentionné ci-dessus à des tuyaux métalliques 21 et 22 extérieurs à la tête laser 3.

L'un de ces tuyaux 21 et 22 est destiné à amener à la tête laser 3 un fluide de refroidissement, par exemple de l'eau, fourni par une source non représentée, et l'autre de ces tuyaux est destiné à évacuer ce fluide après qu'il a traversé la tête 3 et à le conduire à un égout ou à un dispositif de refroidissement adéquat, non représenté, d'où il est ramené à la source.

Chacun des tuyaux 21 et 22 est fixé à la base 2 à une certaine distance de son extrémité, de manière que cette extrémité puisse légèrement se déplacer dans toutes les directions, dans des circonstances qui seront précisées plus loin. Le cas échéant, l'élasticité de ces tuyaux peut contribuer à permettre ces déplacements de leurs extrémités.

Les pièces de raccordement 19 et 20 comportent chacune un premier trou borgne 23, respectivement 24, et elles sont fixées à la tête laser 3, par des moyens qui n'ont pas été représentés, de manière que ces trous 23 et 24 soient respectivement coaxiaux avec les extrémités 17 et 18 du canal mentionné ci-dessus. Un joint d'étanchéité torique est disposé autour de chacun des orifices 17a et 18a, dans une gorge adéquate, entre la tête laser 3 et les pièces 19 et, respectivement, 20.

Ces pièces 19 et 20 comportent encore chacune un deuxième trou borgne 25, respectivement 26, dont l'axe est perpendiculaire à l'axe du trou 23 ou 24 et parallèle à l'axe 4a du barreau laser.

Les axes de ces trous 25 et 26 sont donc confondus et forment un seul axe, désigné par la référence R, qui est évidemment aussi parallèle à l'axe 4a du faisceau laser.

Les extrémités des tuyaux 21 et 22 mentionnés ci-dessus sont cylindriques, et leur diamètre est légèrement inférieur au diamètre des trous 25 et 26. Ces extrémités des tuyaux 21 et 22 sont respectivement engagées dans les trous 25 et 26, et des joints d'étanchéité toriques sont placés autour de ces tuyaux 21 et 22, dans des gorges adéquates.

En outre, deux pièces de soutien 27 et 28 sont fixées à la base 2 du laser 1, d'une manière qui n'a pas été représentée, de part et d'autre de la tête laser 3, à proximité des pièces de raccordement 19 et 20.

Ces pièces de soutien comportent chacune un trou cylindrique 27a, respectivement 28a, à travers lequel passe le tuyau 21, respectivement 22. Le diamètre de ces trous 27a et 28a est supérieur au diamètre des tuyaux 21 et 22, de sorte que ces derniers peuvent se déplacer radialement dans ces trous, dans des conditions qui seront décrites plus loin.

On voit que les extrémités des tuyaux 21 et 22 forment chacune le premier élément d'une sorte de charnière dont le deuxième élément est constitué par la pièce de raccordement 19 ou 20 correspondante. En outre, ces charnières ont le même axe R, qui est situé à une certaine distance de la base 2 et parallèle à celle-ci, de sorte qu'il est possible de faire pivoter la tête laser 3 autour de cet axe R, pour autant que des moyens de serrage de cette tête laser 3 sur la base, qui seront décrits plus loin, ne s'opposent pas à ce pivotement.

A titre d'exemple, la figure 3 montre, en traits mixtes et avec la référence 3′, la tête laser 3 dans une position où elle a pivoté de 45° environ.

La présence des charnières constituées par les pièces de raccordement 19 et 20 et par les tuyaux 21 et 22 permet donc de remplacer facilement la lampe 5 lorsque cela est nécessaire, en faisant pivoter la tête laser 3 jusqu'à une position où plus aucun élément du laser 1 n'empêche de faire glisser cette lampe 5 hors de son logement.

Il est même facile, en dimensionnant les divers éléments décrits ci-dessus de manière adéquate, de permettre un pivotement de la tête laser 3 jusqu'à une position où le plan vertical passant par l'axe 5a de la lampe 5 ne coupe plus la base 2.

Lorsque la tête 3 se trouve dans une telle position, le fluide de refroidissement qui s'échappe éventuellement lorsque la lampe 5 est retirée de son logement tombe à côté de la base 2 et non pas sur celle-ci ou sur l'un ou l'autre des éléments du laser 1 qui y sont fixés.

Il est donc possible de remplacer la lampe 5 sans risquer de provoquer une corrosion de la base 2 et/ou un court-circuit entre ces éléments du laser 1.

En outre, lorsque la lampe 5 est brisée, il est aisé de nettoyer son logement en y passant une brosse, par exemple. Dans un tel cas, les débris de la lampe 5 ne risquent pas de tomber sur la base 2 et/ou sur les autres éléments du laser 1.

Il faut noter que, lorsque la tête laser 3 pivote de la manière évoquée ci-dessus, les pièces de soutien 27 et 28 retiennent les extrémités des tuyaux 21 et 22 et empêchent ces derniers de se tordre sous le poids de cette tête 3.

Dans la forme d'exécution représentée, le laser 1 comporte en outre des moyens de réglage de la position et de l'orientation de la tête laser 3 par rapport à la base 2, et donc du faisceau émis lorsque ce laser 1 fonctionne.

Ces moyens de réglage comprennent trois vis 29, 30 et 31 disposées dans des trous filetés 32, 33 et 34 traversant toute la tête laser 3 perpendiculairement au plan de la base 2. Les trous 32 et 33 sont disposés chacun à une extrémité de la tête laser 3, à proximité de sa face frontale, et le trou 34 est disposé sensiblement au milieu de la longueur de cette tête 3, à proximité de sa face arrière, de sorte que les axes de ces trous 32 et 34 sont disposés en triangle dans la vue en plan du laser 1.

Les vis 29 et 30 coopèrent respectivement avec une plaquette 35 et une plaquette 36 qui peuvent coulisser dans des gorges ménagées dans la base 2 perpendiculairement à la direction de la longueur de cette base 2.

Les moyens permettant de déplacer les plaquettes 35 et 36 dans ces gorges et de les bloquer lorsqu'elles sont dans la position voulue n'ont pas été représentés car leur réalisation est à la portée de l'homme du métier.

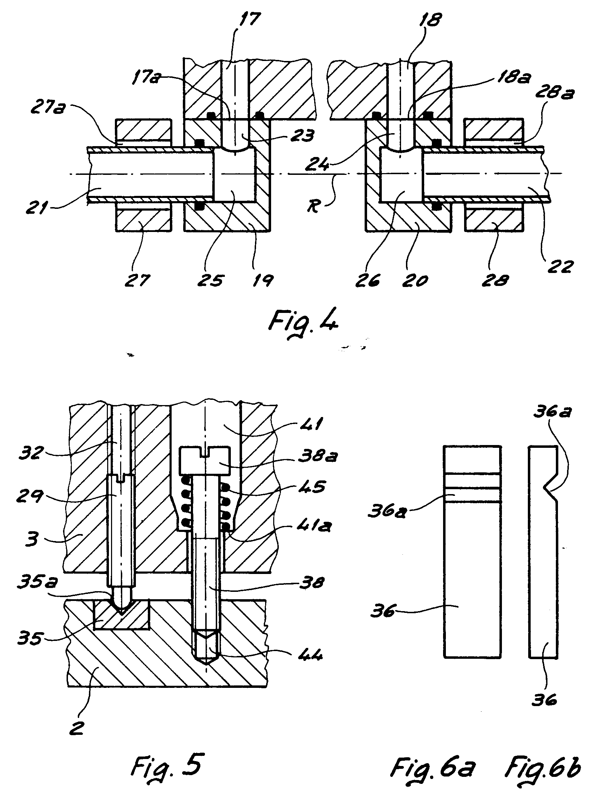

La plaquette 35 comporte un trou conique 35a dans lequel est engagée l'extrémité de la vis 29, qui est sphérique (figure 5).

La plaquette 36 comporte une rainure 36a de section triangulaire allongée dans une direction parallèle à l'axe 4a du barreau laser (figures 6a et 6b) dans laquelle est disposée l'extrémité, également sphérique, de la vis 30.

En outre, la vis 31, dont l'extrémité est également sphérique s'appuye sur une zone plane de la base 2, qui est constituée, dans cet exemple, par la face supérieure d'une plaquette plane 37 fixée à la base 2. Cette plaquette 37 n'est visible sur aucune des figures et a donc été représentée en pointillé dans les figures 1 à 3.

On voit que la position et l'orientation de l'axe 4a du faisceau laser peuvent être facilement réglées tant que des moyens de serrage de la tête laser 3 sur la base 2, qui seront décrits plus loin, ne sont pas serrés.

La position et l'orientation de l'axe 4a dans un plan perpendiculaire au plan de la base 2 peuvent être réglées en agissant sur les vis 29 à 31, alors que la position et l'orientation de cet axe 4a dans un plan parallèle au plan de la base 2 peuvent être réglées en déplaçant les plaquettes 35 et 36.

On voit que tous ces réglages peuvent être faits librement, au moins dans une certaine mesure, grâce au fait que les ouvertures 27a et 28a ménagées dans les pièces de soutien 27 et 28 ont des diamètres supérieurs aux diamètres des tuyaux 21 et 22, et grâce au fait que ces tuyaux 21 et 22 sont fixés à la base 2 à une certaine distance de leur extrémité, de la manière qui a été évoquée ci-dessus.

En outre, ces réglages n'ont pas besoin d'être refaits après que l'on a fait pivoter la tête laser 3 autour de l'axe R pour permettre l'échange de la lampe 5 ou pour toute autre raison.

En effet, la position des vis de réglage 29 à 31 par rapport à la tête laser 3 et des plaquettes 35 et 36 par rapport à la base 2 n'est pas modifiée lors d'un tel pivotement.

Lorsqu'on remet la tête 3 en place, la souplesse des tuyaux 21 et 22 permet aux extrémités des vis 29 et 30 de s'engager à nouveau respectivement dans le trou conique 35a et dans la rainure 36a, et à la vis 31 de s'appuyer à nouveau contre la plaquette 37. La tête laser 3 reprend donc exactement la position qu'elle occupait avant de pivoter autour de l'axe R.

Il est également important de relever que, quelles que soient les dilatations de la tête laser 3 dues à son échauffement pendant le fonctionnement du laser 1, la vis 29 reste fixe par rapport à la base 2 puisque son extrémité est engagée dans le trou conique 35a de la plaquette 35. Par contre, les vis 30 et 31 peuvent se déplacer en réponse à ces dilatations, la première en glissant dans la rainure 36a de la plaquette 36 et la deuxième en glissant sur la plaquette 37. La rainure 36a étant pratiquement parallèle à la direction de l'axe 4a du faisceau laser, ces dilatations de la tête laser 3 n'ont aucune influence notable sur la position et sur l'orientation de cet axe 4a.

En outre, ces dilatations ne provoquent aucune autre déformation de la tête laser 3 ni aucune tension mécanique dans celle-ci et/ou dans la base 2.

Dans la forme d'exécution représentée, le laser 1 comporte encore des moyens de serrage de la tête laser 3 sur la base 2 qui comprennent trois vis 38, 39 et 40 disposées dans des trous 41, 42 et 43 qui traversent la tête laser 3 dans une direction perpendiculaire au plan de la base 2 et qui sont disposés chacun à proximité de l'un des trous filetés 32 à 34.

Les extrémités des vis 38 à 40 sont engagées dans des trous filetés ménagés dans la base 2. Seul le trou fileté dans lequel est engagée la vis 38 est visible à la figure 5 avec la référence 44.

On voit en outre dans cette figure 5 que le trou 41 comporte un épaulement 41a et qu'un ressort hélicoïdal 45 est serré entre cet épaulement 41a et la tête 38a de la vis 38.

On voit également dans cette figure 5 que les différents diamètres du trou 41 sont toujours supérieurs aux diamètres des portions correspondantes de la vis 38.

Les trous 42 et 43 ont la même forme que le trou 41 décrit ci-dessus, et des ressorts semblables au ressort 45 sont serrés entre les épaulements que présentent ces trous 42 et 43 et les têtes des vis 39 et 40 correspondantes. Ces éléments n'ont pas été représentés en détail, seule une partie de ces vis 39 et 40 étant visible dans la figure 2.

Le jeu qui existe entre les vis 38 à 40 et la paroi des trous 41 à 43 dans lesquels elles sont disposées permet de visser ces vis 38 à 40 dans les trous filetés correspondants quelle que soit la position exacte de la tête laser 3 par rapport à la base 2 résultant des réglages mentionnés ci-dessus.

En outre, ce jeu et le fait que la tête laser 3 n'est pas reliée directement aux vis 38 à 40 mais que des ressorts tels que le ressort 45 sont intercalés entre ces vis 38 à 40 et cette tête laser 3 permettent à cette dernière de se dilater librement en réponse à son échauffement pendant le fonctionnement du laser 1.

Dans la forme d'exécution représentée, le laser 1 a encore l'avantage que la tête laser 3 n'est en contact avec la base 2 que par l'intermédiaire des vis de réglage 29 à 31 et des vis de serrage 38 à 40. Il en résulte que la quantité de chaleur qui peut passer de la tête laser 3 à la base 2 par conduction pendant le fonctionnement du laser est très faible. L'échauffement de la base est donc également faible, et cette base 2 ne risque pas de se déformer.

Dans certains cas où la puissance dissipée par la tête laser 3 est importante, une quantité non négligeable de chaleur peut être transmise par rayonnement de cette tête 3 à la base 2. Pour éviter cette transmission de chaleur et la déformation de la base 2 qui peut en résulter, il est possible de disposer une plaque en un matériau isolant entre la tête laser 3 et la base 2. Cette disposition, qui n'a pas été représentée, est rendue possible par le fait que la tête laser 3 ne repose pas directement sur la base 2.

De nombreuses modifications peuvent être apportées au laser décrit ci-dessus sans pour autant que ces modifications le fassent sortir du cadre de l'invention.

Notamment, les orifices situés aux extrémités du canal ménagé dans la tête laser 3 pour permettre le passage du fluide de refroidissement peuvent être disposés coaxialement l'un à l'autre, chacun sur une des faces terminales de cette tête laser 3.

Dans un tel cas, les pièces de raccordement 19 et 20 peuvent être remplacées par des pièces équivalentes fixées à ces faces terminales et traversées, chacune, d'un seul trou. Une extrémité de ce trou est située en regard de l'orifice correspondant et un tuyau équivalent au tuyau 21 ou 22 des figures 1, 2 et 4, est engagé dans l'autre extrémité de ce trou.

Les extrémités de ces tuyaux peuvent également être engagées directement dans les orifices mentionnés ci-dessus, dont le diamètre est bien entendu choisi en conséquence, sans interposition de pièces de raccordement équivalentes aux pièces 19 et 20 des figures 1, 2 et 4.

Dans de tels cas, des pièces de soutien équivalentes aux pièces 27 et 28 peuvent évidemment aussi être prévues, aux endroits adéquats.

On voit que dans ces formes d'exécution du laser selon l'invention, qui ont pas été représentées, la tête laser est également reliée à la base du laser par des charnières ayant chacune une premier élément constitué par des tuyaux d'amenée et d'évacuation du fluide de refroidissement, et l'autre élément est constitué, selon le cas, par une pièce de raccordement de ce tuyau avec le canal permettant le passage de ce fluide dans la tête laser, ou directement par l'extrémité de ce canal.

Comme dans la forme d'exécution des figures 1 à 4, ces charnières permettent à la tête laser de pivoter par rapport à la base du laser, autour d'un axe parallèle à l'axe du faisceau laser et qui dans ce cas, traverse cette tête laser.

La présente invention peut également être utilisée avec profit même si la puissance du laser est faible et que la tête laser ne doit pas être refroidie pendant le fonctionnement de ce laser.

Dans un tel cas, les tuyaux 21 et 22, ou leurs équivalents, n'existent évidemment pas. Mais la tête laser peut cependant quand même être reliée à la base du laser par au moins une charnière ayant un axe de pivotement à peu près parallèle à l'axe du faisceau laser. Il faut évidemment que cette charnière soit réalisée de manière que son axe de pivotement puisse se déplacer parallèlement à lui-même pendant les opérations d'ajustement de la position et de l'orientation de l'axe du faisceau laser telles que celles qui ont été décrites ci-dessus.

## Revendications

1. Laser à corps solide comportant une base rigide (2), une tête laser (3) comprenant un barreau laser (4) ayant un axe longitudinal (4a) et une lampe de pompage optique (5) couplée audit barreau laser (4), et des moyens de liaison de ladite tête laser (3) à ladite base (2), caractérisé par le fait que lesdits moyens de liaison comportent une charnière permettant de faire pivoter ladite tête (3) par rapport à ladite base (2) autour d'un axe de rotation (R) sensiblement parallèle audit axe (4a) dudit barreau laser (4).

2. Laser selon la revendication 1, caractérisé par le fait qu'il comporte en outre des moyens pour faire circuler autour de ladite lampe de pompage (5) un fluide de refroidissement, comprenant un tuyau d'amenée et un tuyau d'évacuation dudit fluide (21,22) fixés à ladite base (2) et au moins un canal (17,18) relié auxdits tuyaux, disposé dans ladite tête et comportant une portion (16) entourant ladite lampe de pompage (5), et par le fait que l'extrémité d'un premier desdits tuyaux (21,22) est cylindrique et constitue un premier élément de ladite charnière, l'axe de ladite extrémité dudit premier des tuyaux (21,22) étant sensiblement confondu avec ledit axe de rotation (R).

3. Laser selon la revendication 2, caractérisé par le fait qu'il comporte une pièce de raccordement (19,20) fixée à ladite tête laser (3) et comprenant un trou (25,26) communiquant avec ledit canal (17,18) et dans lequel ladite extrémité dudit premier des tuyaux (21,22) est engagée, ladite pièce de raccordement (19,20) constituant le deuxième élément de ladite charnière.

4. Laser selon la revendication 2, caractérisé par le fait que l'une des extrémités dudit canal débouche sur une des faces latérales de ladite tête laser (3) par un orifice, et que l'extrémité dudit premier des tuyaux (21,22) est engagée dans ladite extrémité du canal qui constitue le deuxième élément de ladite charnière.

5. Laser selon la revendication 1, caractérisé par le fait qu'il comporte en outre des moyens pour régler la position et l'orientation de l'axe (4a) dudit barreau laser (4) par rapport à ladite base (2) comprenant :
   - un premier(32), un deuxième (33) et un troisième trou fileté (34) ménagés chacun dans ladite tête laser (3) perpendiculairement au plan de ladite base (2) et disposés en triangle dans une vue en plan de ladite tête laser (3);
   - une première (35) et une deuxième plaquette (36) respectivement disposées dans ladite base (2) en regard desdits premier (32) et deuxième (33) trous filetés;
   - des moyens pour déplacer individuellement lesdites première (35) et deuxième plaquette (36) dans une direction sensiblement perpendiculaire à l'axe (4a) dudit barreau (4);
   - une zone plane de ladite base (2) disposée en regard dudit troisième trou fileté (34),
   - une première (29), une deuxième (30) et une troisième vis (31) disposées chacune dans l'un desdits trous filetés (32, 33, 34) et coopérant respectivement avec ladite première plaquette (35), ladite deuxième plaquette (36) et ladite zone plane (37) pour déterminer séparément les distances entre ladite tête laser (3) et ladite base (2) aux emplacements desdites vis (29,30,31);
   - un trou conique (35a) ménagé dans ladite première plaquette (35) et coopérant avec l'extrémité de ladite première vis (29) pour déterminer la position de l'axe de ladite première vis (29) par rapport à ladite base (2); et
   - une rainure ménagée (36a) dans ladite deuxième plaquette (36) dans une direction sensiblement parallèle audit axe (4a) dudit barreau (4) et coopérant avec l'extrémité de ladite deuxième vis (30) pour déterminer la position de l'axe de ladite deuxième vis (30) par rapport à ladite base (2).

6. Laser selon la revendication 5, caractérisé par le fait qu'il comporte des moyens (38,39,40,45) pour serrer élastiquement ladite (3) tête laser contre ladite base (2).

**Claims**

1. Solid state laser comprising a rigid base (2), a laser head (3) including a laser rod (4) having a longitudinal axis (4a), and an optical pumping lamp (5) coupled to said laser rod (4), and means for connecting said laser head (3) to said base (2), characterized by the fact that said connecting means comprises a hinge enabling said head (3) to be pivoted relative to said base (2) about an axis of rotation (R) substantially parallel to said axis (4a) of said laser rod (4).

2. Laser according to claim 1, characterized by the fact that it further comprises means for circulating a cooling fluid about said pumping lamp (5) including a pipe for delivering and a pipe for removing said fluid (21, 22), both fixed to said base (2) and at least one duct (17, 18) connected to said pipes, disposed in said head and comprising a portion (16) surrounding said puping lamp (5), and by the fact that the end of a first of said pipes (21, 22) is cylindrical and forms a first element of said hinge, the axis of said end of said first of the pipes (21, 22) coinciding substantially with said axis of rotation (R).

3.  Laser according to claim 2, characterized by the fact that it comprises a connector (19, 20) fixed to said laser head (3) and having a hole (25, 26) communicating with said duct (17, 18) and in which said end of said first of the pipes (21, 22) is engaged, said connector (19, 20) forming the second element of said hinge.

4.  Laser according to claim 2, characterized by the fact that one of the ends of said duct opens in one of the lateral surfaces of said laser head (3) via an orifice, and that the end of said first of the pipes (21, 22) is engaged in said end of the duct which forms the second element of said hinge.

5.  Laser according to claim 1, characterized by the fact that it further comprises means for adjusting the position and orientation of the axis (4a) of said laser rod (4) relative to said base (2) comprising :
    - a first (32), a second (33) and a third (34) threaded hole each provided in said laser head (3) perpendicular to the plane of said base (2) and arranged in triangular configuration when the laser head (3) is viewed in plan;
    - a first (35) and a second (36) plate arranged in said base (2) facing said first (32) and second (33) threaded holes respectively;
    - means for individually moving said first (35) and second (36) plates in a direction substantially perpendicular to the axis (4a) of said rod (4);
    - a planar region of said base (2) facing said third threaded hole (34);
    - a first (29), a second (30) and a third (31) screw each engaged in one of said threaded holes (32, 33, 34) and cooperating respectively with said first plate (35), said second plate (36) and said planar region (37) for separately setting the distances between said laser head (3) and said base (2) at the locations of said screws (29, 30, 31);
    - a conical recess (35a) arranged in said first plate (35) and cooperating with the end of said first screw (29) to set the position of the axis of said first screw (29) relative to said base (2); and
    - a groove (36a) arranged in said second plate (36) in a direction substantially parallel to said axis (4a) of said rod (4) and cooperating with the end of said second screw (30) to set the position of the axis of said second screw (30) relative to said base (2).

6.  Laser according to claim 5, characterized by the fact that it comprises means (38, 39, 40, 45) for elastically tightening said laser head (3) against said base (2).

**Patentansprüche**

1.  Festkörperlaser mit einem starren Grundkörper (2), einem Laserkopf (3) mit einem Laserstab (4), der eine Längsachse (4a) hat, und einer Lampe für optisches Pumpen (5), die mit dem Laserstab (4) gekoppelt ist, und mit Mitteln zum Verbinden des Laserkopfes (3) mit dem Grundkörper (2), dadurch gekennzeichnet, dass die Verbindungsmitteln ein Gelenk aufweisen, das es erlaubt, den Kopf (3) bezüglich des Grundkörpers (2) um eine Drehachse (R) zu verschwenken, die im wesentlichen parallel zur Achse (4a) des Laserstabes (4) ist.

2.  Laser nach Anspruch 1, dadurch gekennzeichnet, dass er weiters Mitteln zum Zirkulieren eines Kühlfluides um die Pumpenlampe (5) aufweist, die ein zuführrohr und ein Ablaufrohr für das Fluid (21, 22), die an dem Grundkörper (2) befestigt sind, und wenigstens einen Kanal (17, 18) aufweist, der mit den Rohren verbunden ist, der im Kopf angeordnet ist, und der einen Teil (16) aufweist, der die Pumpenlampe (5) umgibt, und dass das Ende eines ersten der Rohre (21, 22) zylindrisch ist und ein erstes Element des Gelenkes bildet, wobei die Achse des Endes des ersten der Rohre (21, 21) mit der Drehachse (R) im wesentlichen zusammenfällt.

3.  Laser nach Anspruch 2, dadurch gekennzeichnet, daß er ein Anschlußstück (19, 20) besitzt, das am Laserkopf (3) befestigt ist und das ein Loch (25, 26) aufweist, das mit dem Kanal (17, 18) in Verbindung steht und in den das Ende des ersten der Rohre (21, 22) eingesetzt ist, wobei das Anschlußstück (19, 20) das zweite Element des Gelenkes bildet.

**4.** Laser nach Anspruch 2, dadurch gekennzeichnet, daß ein Ende des Kanals an einer der Seitenflächen des Laserkopfes (3) mit einer Mündung endet, und daß das Ende des ersten der Rohre (21, 22) in das Ende des Kanals eingesetzt ist, das das zweite Element des Gelenkes bildet.

**5.** Laser nach Anspruch 5, dadurch gekennzeichnet, dass er weiters Mitteln zum Einstellen der Stellung und der Ausrichtung der Achse (4a) des Laserstabes (4) gegenüber dem Grundkörper (2) aufweist, welche enthalten:

- ein erstes (32), ein zweites (33) und ein drittes Gewindeloch (34), die jeweils senkrecht zur Ebene des Grundkörpers (2) in den Laserkopf (3) gebohrt sind und in der Draufsicht des Laserkopfes (3) in Dreieckform angeordnet sind;
- ein erstes (35) und ein zweites Plättchen (36), die der ersten (32) bzw. der zweiten (33) Gewindebohrung gegenüberliegend im Grundkörper (2) angeordnet sind,
- Mitteln zum individuellen Verstellen des ersten (35) und des zweiten Plättchens (36) in einer Richtung im wesentlichen senkrecht zur Achse (4a) des Stabes (4);
- eine ebene Zone des Grundkörpers (2), die gegenüber der dritten Gewindebohrung (34) angeordnet ist,
- eine erste (29), eine zweite (30) und eine dritte (31) Schraube, die jeweils in einer der Gewindebohrungen (32, 33, 34) angeordnet sind und die jeweils mit dem ersten Plättchen (35), dem zweiten Plättchen (36) und der ebenen Zone (37) zusammenwirken, um an den Stellen der Schrauben (29, 30, 31) die Abstände zwischen dem Laserkopf (3) und dem Grundkörper (2) getrennt einzustellen;
- ein konisches Loch (35a), das im ersten Plättchen (35) vorgesehen ist und das mit dem Ende der ersten Schraube (29) zusammenwirkt, um die Stellung der Achse der ersten Schraube (29) gegenüber dem Grundkörper (2) zu bestimmen; und
- eine Nut (36a), die in das zweite Plättchen (36) in eine Richtung im wesentlichen parallel zur Achse (4a) des Stabes (4) eingearbeitet ist und die mit dem Ende der zweiten Schraube (30) zusammenwirkt, um die Stellung der Achse der zweiten Schraube (30) gegenüber dem Grundkörper (2) zu bestimmen.

**6.** Laser nach Anspruch 5, dadurch gekennzeichnet, dass er Mitteln (38, 39, 40, 45) zum elastischen Festlegen des Laserkopfes (3) an dem Grundkörper (2) aufweist.

Fig.1

Fig.2

EP 0 316 664 B1

Fig. 3

Fig. 4

Fig. 5

Fig. 6a   Fig. 6b